# EUROPEAN PATENT SPECIFICATION

(11) **EP 0 999 078 B1**
(45) Date of publication and mention of the grant of the patent: **28.01.2004**
(21) Application number: 99121756.3
(22) Date of filing: 03.11.1999
(51) Int. Cl.: B60H 1/03, B60H 1/14, F01P 7/16, B60H 1/00

(54) **Cooling-heating circuit for a vehicle**
Kühl-/Heizkreislauf für ein Kraftfahrzeug
Circuit de refroidissement/chauffage de véhicule

(30) Priority: 04.11.1998 DE 19850829
(43) Date of publication of application: 10.05.2000
(73) Proprietor: Valeo Klimasysteme GmbH, 96476 Rodach (DE)
(72) Inventor: Khelifa, Noureddine, 96450 Coburg (DE); Riehl, Horst, 96476 Rodach (DE)
(74) Representative: Lemaire, Marc

(56) References cited:
- EP-A- 0 638 712
- US-A- 4 532 894
- US-A- 4 892 248
- US-A- 5 549 153
- US-A- 5 647 534

## Description

### Field of the invention

The invention relates to a cooling-heating circuit for a vehicle, in particular, but not exclusively, for an electric vehicle having a fuel cell, according to the preamble of claim 1.

### Background of the invention

A generic cooling-heating circuit for a powered vehicle, having at least two devices that increase the temperature of the cooling-heating circuit, at least two devices that reduce the temperature of the cooling-heating circuit and at least one pump, is known from US-5 549 153. This system does not offer a completely satisfactory solution with respect of the selective association to enable the switching on and off of the cooling-heating circuit devices.

Another cooling-heating circuit for a powered vehicle is known from EP-0 638 712. In particular, there a device for the cooling of motor vehicle components is described, with a coolant circuit in which a first unit to be cooled, a first heat exchanger and a control device are disposed. The control devices controls, in dependence on operating parameters, at least the flow rate of a coolant pump and of a fan associated with the first heat exchanger. Provided parallel to the first heat exchanger is a bypass line, controllable by means of a valve, in the coolant circuit, in which a second heat exchanger is disposed that can be provided with fresh air by means of a second fan and that is used for heating purposes. The second heat exchanger is additionally supplied from a second coolant circuit in which at least one further unit is disposed. The first unit to be cooled may be a fuel cell or the heat exchanger of a fuel cell coolant circuit. Consequently the two coolant circuits are coupled via a common heat exchanger, whose waste heat can be used to heat the passenger compartment. As a result firstly, with the valve closed, both coolant circuits are completely separated from one another, in which case only the second coolant circuit is then available for heating the passenger compartment. In contrast to this, with the valve open, both coolant circuits serve to heat the passenger compartment. Although the known device is supposed to achieve the object of cooling two vehicle units whose coolant temperatures are at different levels, whereby at the same time the calorific output made available for the passenger compartment is to be optimized, this system does not offer a completely satisfactory solution either with respect to the cooling capacity made available for the units or with respect to the achievable calorific output.

### Object of the invention

Therefore an object of the invention is to develop a generic cooling-heating circuit in such a manner that the thermal output given off to the individual devices and/or absorbed is increased. Expressed differently, the object is to provide an overall system with increased efficiency with respect to achievable cooling capacity and/or achievable calorific output, in particular for units to be cooled or for a passenger compartment.

### Summary of the invention

A cooling-heating circuit for a powered vehicle, having at least two devices that increase the temperature of the cooling-heating circuit, at least two devices that reduce the temperature of the cooling-heating circuit and at least one pump, wherein the temperature-increasing devices and/or the temperature-reducing devices are associated with the cooling-heating circuit at least partly in accordance with their operating states, in accordance with their temperatures whereby the temperature-increasing devices and/or the temperature-reducing devices can be switched between series and/or parallel arrangement at least to some extent with respect to their association with the cooling-heating circuit.

Accordingly, the operating conditions, in particular the temperatures of the temperature-increasing devices, i.e. the devices provided to cool units, and/or of the temperature-reducing devices, e.g. a heat exchanger used to heat the interior space, are at least to some extent taken into consideration upon the association of the devices with the cooling-heating circuit. If, for example, electrical components are to be cooled, this cooling should occur at a point of the cooling-heating circuit that is as cold as possible, when the operating temperature of the electrical components to be cooled is at its lowest in comparison with other units to be cooled. With respect to the temperature-reducing devices, for example a heat exchanger used to heat the passenger compartment should be disposed at the warmest point of the cooling-heating circuit. Alternatively to the temperature levels, with respect to the arrangement of the individual devices their heating capacity or cooling requirement could be taken into consideration as an operating state. The units to be cooled should preferably interact directly with the cooling-heating circuit, so that fewer components, e.g. only a pump, are required. A fuel cell that is possibly to be integrated and that is usually cooled with de-ionized water is the only exception, for which reason a separate cooling circuit with respect to this is preferred.

In one preferred embodiment the temperature-increasing devices and/or the temperature-reducing devices can be selectively associated at least to some extent with the cooling-heating circuit. By the possibility of the selective association, for example a unit which requires no cooling may be excluded from the cooling-heating circuit, in particular by means of a bypass line with appropriately controllable valves. This arrangement also enables e.g. the selective switching on and off of a heat exchanger used for heating purposes for the vehicle interior.

The temperature-increasing devices and/or the temperature-reducing devices can advantageously be connected at least to some extent with respect to their association with the cooling-heating circuit, in particular with respect to their sequence. Consequently, for example in a heating-cooling circuit with associated electric power output stage and fuel cell for the heating operation in a start phase firstly the fuel cell and then the electric power output stage can be acted upon by the cooling-heating circuit, after which, upon achieving specific operating parameters, an appropriate reversal of the sequence is possible. In this manner a very flexible system is achieved, which enables an adaptation to the instantaneous operating states of the entire vehicle and in particular of the heating-cooling circuit.

Apart from the determined association of the temperature-increasing and/or temperature-reducing devices in series connection and/or parallel arrangement, this association may also be variable, so that in another preferred embodiment the temperature-increasing devices and/or the temperature-reducing devices can be switched between series and/or parallel arrangement at least to some extent with respect to their association with the cooling-heating circuit. The previously mentioned switching takes place in particular taking into consideration the operating states of the individual devices; if, for example, for a fuel cell cooling is required, which with respect to temperature and/or output virtually corresponds to that for an electric power output stage, these two temperature-increasing devices can be selectively acted upon in parallel operation by the cooling-heating circuit. If now, as a result of changing operating states during the driving operation of the vehicle, the temperature of the fuel cell increases, in a series-connection operation there may be a change-over, in which firstly the electric power output stage and then the fuel cell are supplied with coolant. A corresponding optional change-over facility may also be provided for the temperature-reducing devices, which is particularly advantageous when one of the temperature-reducing devices is provided to achieve utilizable heat, e.g. a heat exchanger which serves to heat the passenger compartment.

In yet another preferred embodiment of the cooling-heating circuit of the invention, at least one temperature-increasing device is a fuel cell or a heat exchanger of a fuel cell cooling circuit. Fuel cells available at this time are usually cooled with de-ionized water, for which reason it is necessary to insert a heat exchanger, since the de-ionized water has a strongly corrosive action, and accordingly as few lines and components as possible should come into contact with this de-ionized water. Fuel cells are attaining ever increasing importance for vehicles that are driven by electric motor, and also for hybrid vehicles, i.e. vehicles driven both by an internal combustion engine and also electric motor.

Advantageously, at least one of the temperature-increasing devices is an electric power output stage or a heat exchanger of a cooling circuit of an electric power output stage. Various electrical devices of a vehicle generate utilizable waste heat or require cooling, so that they can advantageously be associated with the heating-cooling circuit. In particular, electronic circuits, compressors and similar units can be understood by an electric power output stage or be combined as such.

Preferably, at least one of the temperature-increasing devices is a process gas cooling device, in particular a heat exchanger for a fuel gas and/or for compressed air. Some applications, inter alia the operation of a fuel cell, require a preliminary treatment of the used process gases, in particular compression. The preliminary treatment of process gases frequently results in an increase in their temperature, in which case this temperature can be taken away as available heat or also has to be taken away for safety reasons. In a particularly preferred embodiment, therefore a heat exchanger is associated or can be associated or can be connected at a suitable site in the cooling-heating circuit, which has two separate gas phases, namely one for compressed air, as nowadays required for fuel cells, and one for a warm fuel gas. Depending on the requirement profile, of course also two separated heat exchangers or also possibly just a heat exchanger for one of the gases can be provided. If two separate heat exchangers are provided, they can also be associated, independently of one another, at respective suitable positions with the cooling-heating circuit, optionally with the possibility of selective switching on and off and also an optional series or parallel connection with respect to other temperature-increasing and/or temperature-reducing devices.

In order to increase the efficiency of the entire cooling-heating circuit or also to make the usable waste heat available at a higher temperature level, a heat pump circuit, in particular a reversible heat pump circuit, is associated with the cooling-heating circuit. By the association of a heat pump circuit, a cooling of the passenger compartment can additionally be achieved. In the case of a reversible heat pump circuit, both a heating and also a cooling of the passenger compartment can be achieved in a particularly simple manner.

The heat pump circuit can advantageously be associated with the cooling-heating circuit via at least one heat exchanger, in particular via two heat exchangers. The association of these heat exchangers enables a complete fluid decoupling of the heat pump circuit from the cooling-heating circuit. If several heat exchangers, in particular two heat exchangers, are provided, they can be associated at different temperature levels to the cooling-heating circuit and where appropriate perform different functions, for example one heat exchanger can transfer heat from the cooling-heating circuit to the heat pump circuit, whereas another heat exchanger transfers heat from the heat pump circuit to the cooling circuit.

Finally, it is preferred that the heat exchanger or heat exchangers can be associated with the cooling-heating circuit as a temperature-increasing device and/or temperature-reducing devices. In this advantageous embodiment there is consequently the possibility of utilizing the different temperature levels of the cooling-heating circuit for the heat pump circuit. It should be understood that a corresponding selective switching on and off and also a selective switching between parallel and series operation on the heat exchanger or heat exchangers can be appropriately used.

### Brief description of the drawings

Further advantages and features of the present invention become apparent from the following detailed description of currently preferred embodiments with reference to the attached figures, in which:
- Figure 1: shows a first preferred embodiment of the cooling-heating circuit according to the invention.
- Figure 2: diagrammatically shows a second embodiment of the cooling-heating circuit according to the invention, in which a selective change-over between parallel and series operation of two temperature-increasing devices is represented.
- Figure 3: shows a third preferred embodiment of the present invention, in which the temperature of used process gases are supplied via a heat exchanger to the cooling-heating circuit.
- Figure 4: shows a fourth preferred embodiment of the invention, substantially corresponding to the embodiment shown in Figure 3, but with the additional facility of switching between series and parallel operation of two heat exchangers as temperature-increasing devices.
- Figure 5: shows a fifth preferred embodiment of the invention, in which a heat pump circuit is associated with the cooling-heating circuit via a heat exchanger.
- Figure 6: diagrammatically shows a sixth preferred embodiment of the invention, in which a heat pump circuit is associated with the cooling-heating circuit by using two heat exchangers.
- Figure 7: diagrammatically shows a seventh preferred embodiment of the invention with the use of a condenser for R134a or CO₂ as coolant that is integrated in the heating-cooling circuit.

### Description of the preferred embodiments

In the various figures, like reference numerals refer to like parts.

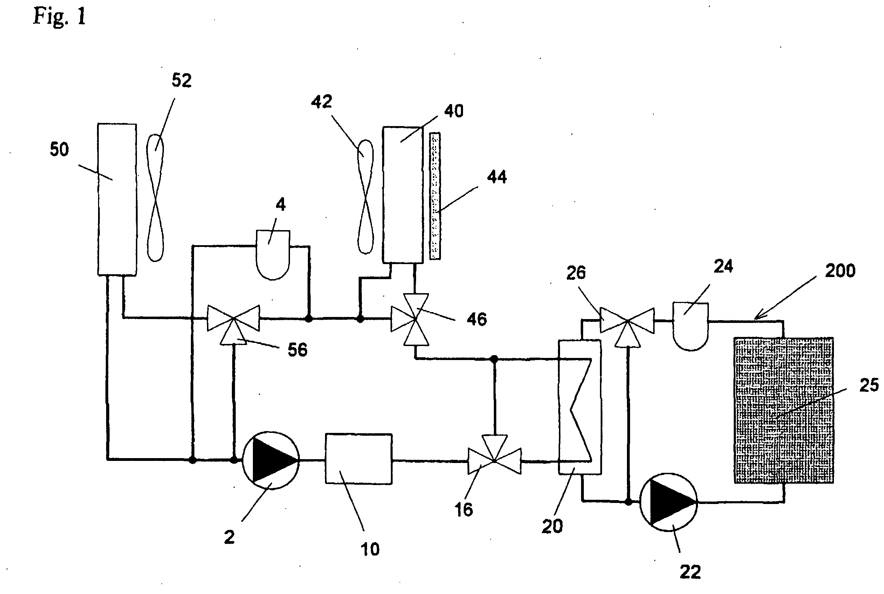

Figure 1 shows a cooling-heating circuit in accordance with a first preferred embodiment of the invention. The cooling-heating circuit for a motor vehicle comprises a coolant pump 2, which supplies a first temperature-increasing device 10, in the shown embodiment an electric power output stage. The temperature-increasing device 10 may, for example, be an electronic circuit, a compressor or another electrically operated device, which virtually immediately upon commissioning delivers heat at a relatively low value, e.g. approx. 60° . A second temperature-increasing device 20, which in the shown embodiment is a heat exchanger of a fuel cell cooling circuit 200, is situated switched in series to the first temperature-increasing device 10. This second, following temperature-increasing device feeds e.g. heat into the cooling-heating circuit at a temperature level of approx. 80°, so that the coordination of the temperature-increasing devices 10, 20 is provided in accordance with the operating conditions, in particular according to the temperature level existing in each case. Upon starting the vehicle, where appropriate a cooling in the fuel cell may be dispensed with, so that the second temperature-increasing device can be avoided by means of a bypass line provided at the valve 16. Alternatively or additionally, a corresponding bypass line may also be provided in the fuel cell cooling circuit 200, controlled via a valve 26.

In the represented embodiment, the fuel cell cooling circuit 200 comprises in particular a coolant pump 22 following the heat exchanger 20, the fuel cell 25 itself, an equalizing vessel 24 and the valve 26 controlling the bypass line. It should be mentioned that in the shown embodiment the fuel cell cooling circuit 200 is completely separated from the cooling-heating circuit, and is only coupled via the heat exchanger 20, since the fuel cell cooling circuit 200 at this time is operated with de-ionized water, so that the fuel cell cooling circuit 200 should be kept as small as possible.

After the second temperature-increasing device 20, i.e. the heat exchanger for the fuel cell heating circuit, a first temperature-reducing device 40 is associated with the cooling-heating circuit. In the shown embodiment the temperature-reducing device 40 is a heat exchanger, which may serve to heat the passenger compartment. The cooler 40 is selectively actuated via a valve 46, i.e. can be supplied or bypassed depending on the temperature and consumption requirements. The valve 46 may be omitted if in the heating/air conditioning unit measures are taken to avoid pickup in summer. The heat exchanger 40 can be supplied with air via a fan 42 and has an additional heating device 44, which when required may electrically generate additional heat. In the shown embodiment the additional heating device 44 is a PTC heating register. Finally, the cooling-heating circuit is conveyed by means of a valve 56 directly back to the pump (small circuit) or supplied to an external cooler 50 as second temperature-reducing device in order to return from there to the pump 2 (large cooling circuit). In the shown embodiment the second temperature-reducing device 50 is a conventional vehicle cooler, which can be impinged by a fan 52, in order to be able to increase the heat emission to the surroundings.

As in the previously known solutions, corresponding control devices may be provided for the fans 42, 52. Furthermore, an equalizing vessel 4, by means of which the coolant level in the overall system can be maintained, is associated with the cooling-heating circuit. The equalizing vessel may be omitted if accordingly flexible hoses are used. With respect to the temperature-reducing devices 40, 50 it should still be stated that they can be connected in series so as to be able to utilize a maximum temperature level of e.g. approx. 80° for the heating of the passenger compartment, while the external air cooler is supplied with air of max. 50°, with the result that its operating temperature should lie at a slightly higher temperature value.

The embodiment described above is characterized by a particularly high efficiency, caused by the association of temperature-increasing and temperature-reducing devices, corresponding to the operating conditions, to the cooling-heating circuit. The different temperature levels of the individual devices was indeed known in the prior art, but no account was taken of the different temperature levels, so that this embodiment offers clear technical progress. It should also be mentioned that, e.g. with the use of low temperature fuel cells, a reversal of the sequence may be a possibility.

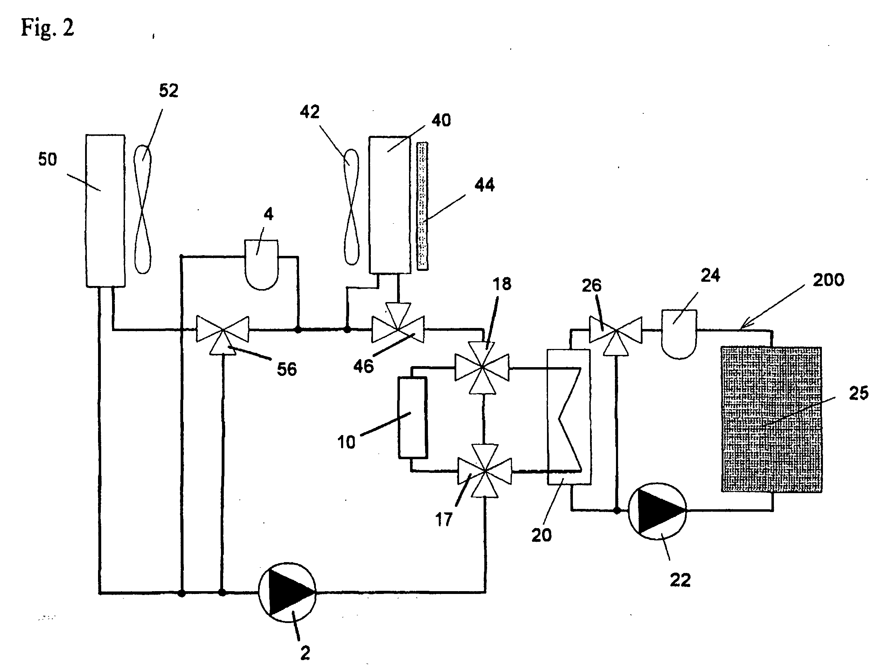

Figure 2 shows a second preferred embodiment of the cooling-heating circuit according to the invention, in which components which are similar or correspond to the embodiment shown in Figure 1, are provided with corresponding reference numbers. A description of the corresponding components, such as e.g. the fuel cell cooling circuit 200, is not to be repeated for the sake of a more concise representation. In contrast to the embodiment represented in Figure 1, in this embodiment the two temperature-increasing devices 10, 20, i.e. the electric power output stage 10 and the heat exchanger 20 serving for coupling with the fuel cell cooling circuit 200, are supplied with coolant both in parallel operation and also in series operation. Via two switchable valves 17, 18 just one of the devices 10, 20 can optionally be associated with the cooling-heating circuit, according to the operating states of the devices 10, 20 that supply heat. Moreover, the valves 17, 18 enable the coolant to flow optionally firstly through the first temperature-increasing device 10 and then through the second temperature-increasing device 20 or vice versa. Finally, the valves 17, 18 also enable both temperature-increasing devices 10, 20 to be supplied with coolant in parallel mode, i.e. simultaneously. A corresponding enlargement to more than two temperature-increasing devices may occur in similar fashion, whereby individual devices can be combined in groups in parallel and/or series connection. The embodiment represented here enables a very exact supply of the temperature-increasing devices 10, 20 with coolant, according to the operating state, in particular the temperature. For example, in a start phase in which both the electrical units to be cooled and also the heat exchanger of the fuel cell circuit still have a relatively low temperature, the valves 17, 18 may be operating in parallel mode, after which upon reaching the respective operating temperatures the embodiment represented in Figure 1 is realized by means of the valves 17, 18 with regard to circuit engineering.

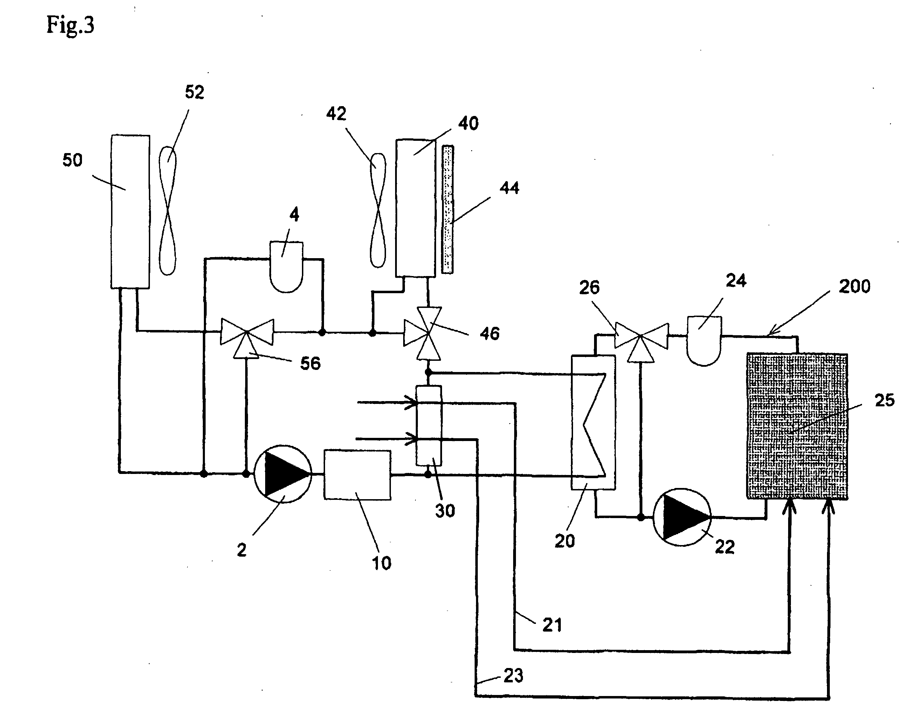

Figure 3 diagrammatically shows a third preferred embodiment of the heating circuit according to the invention, in which case corresponding parts are again provided with the same reference number and at this juncture are not described in detail again. The cooling-heating circuit of the embodiment represented here corresponds essentially to the embodiment shown in Figure 1, in which case a third temperature-increasing device 30 is associated, in parallel connection, with the second temperature-increasing device 20, i.e. the heat exchanger of the fuel cell cooling circuit 200. The third temperature-increasing device 30 is a heat exchanger, which serves to cool fuel conveyed in a line 21 and also compressed air conveyed in a line 23. Fuel, in particular in gaseous form, and compressed air frequently have to be pretreated when operating fuel cells, so that these process gases have a relatively high temperature which can be supplied to the cooling-heating circuit.

Although not represented, the three heat exchangers 10, 20, 30 could also be associated with the cooling-heating circuit connected altogether in series. If, for example, the electric power output stage 10 as a first temperature-increasing device has a temperature level of approx 60 , the process gases to be cooled have for instance temperatures of 80 and the heat exchanger of the fuel cell cooling circuit 200 a temperature of approx. 90 , then the three temperature-increasing devices 10, 20, 30 should be provided, connected in series according to their temperatures. Although in the represented embodiment the heat exchanger 30 is provided both for fuel gas and also for compressed air, the person skilled in the art can recognize that separate heat exchangers may also be used for this, which may then be accordingly be associated with the cooling-heating circuit connected in series and/or parallel to one another and with respect to the other temperature-increasing devices. Furthermore, in certain applications it may also be necessary to heat instead of cool the process gases by means of the cooling-heating circuit, so that the heat exchanger 30 would act as a temperature-reducing device.

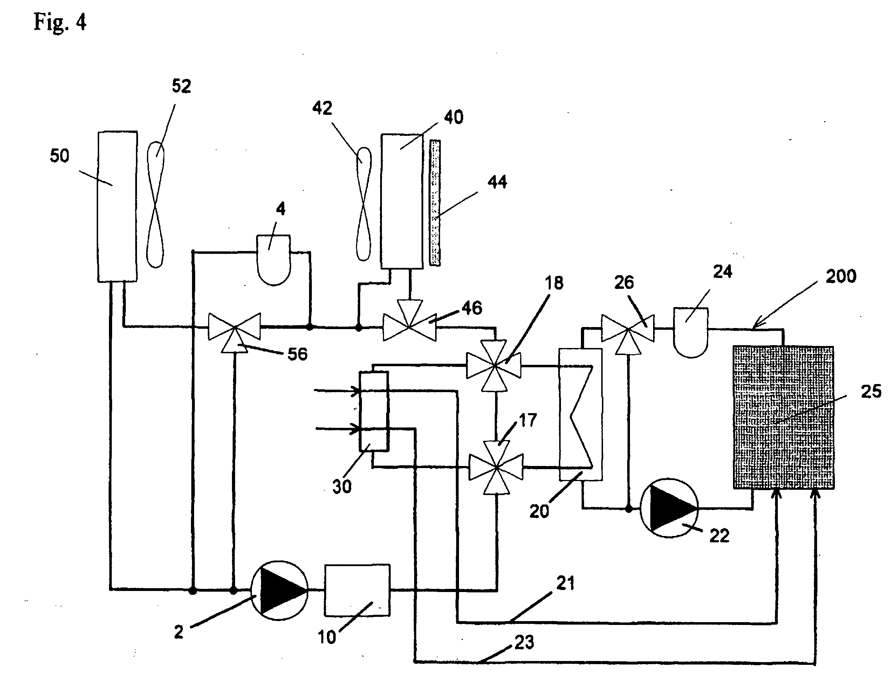

Figure 4 shows another preferred embodiment of the cooling-heating circuit according to the invention in which the concepts of the embodiments of Figure 2 and Figure 3 are essentially combined. In this embodiment the coolant travels from the pump into the first temperature-increasing device 10, e.g. the electric power output stage, and then arrives at a regulating valve 17. Depending on the operating conditions of the device 10, 20, 30, by means of the regulating valve 17 the coolant is distributed proportionally in parallel operation to the two temperature-increasing devices 20, 30, the coolant is conveyed directly to the regulating valve 18 or just to one of the temperature-increasing devices 20, 30. In parallel operation, after passing through and being heated by the two temperature-increasing devices 20, 30, the flow of coolant is combined by means of the regulating valve 18. In the case of selective association of only one temperature-increasing device 20, 30, the coolant is directly conveyed further via the regulating valve 18. In the case of the optional series association of the two temperature-increasing devices 20, 30, the regulating valve 18 will convey the coolant back to the regulating valve 17, from where the coolant then is conveyed through the temperature-increasing device, through which no coolant previously flowed.

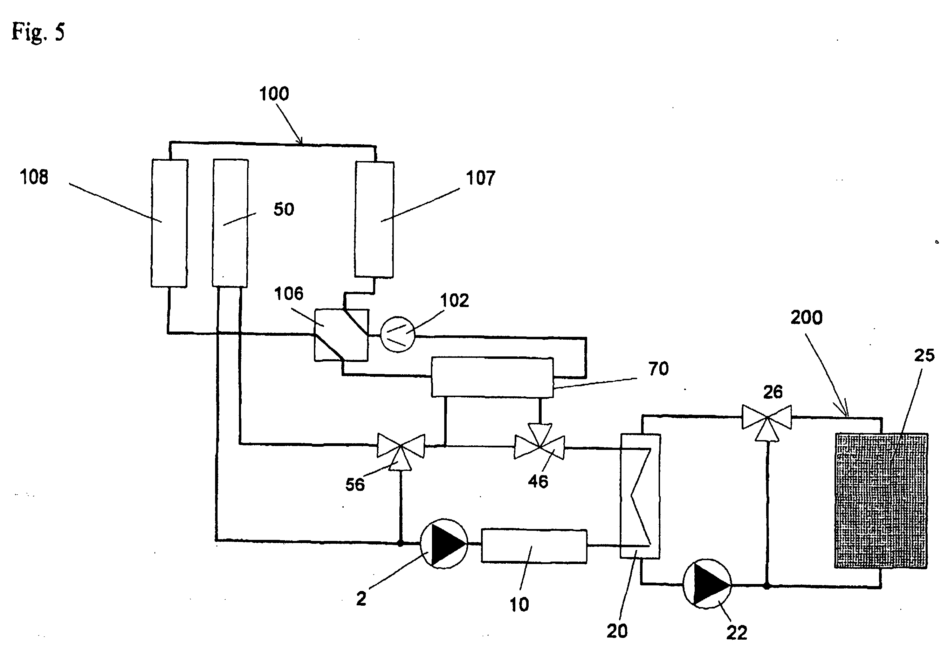

A fifth preferred embodiment of the cooling-heating circuit according to the invention, with which a heat pump circuit 100 is associated via a heat exchanger, is represented in Figure 5. As in the embodiment shown in Figure 1, after the pump 2 the coolant arrives at a first temperature-increasing device 10, e.g. an electric power output stage, and then a heat exchanger 20, which couples the heating-cooling circuit with a fuel cell cooling circuit 200. The person skilled in the art should understand that the preceding statements regarding series and parallel connection of the individual temperature-increasing devices are accordingly applicable to the shown embodiment. To increase the overall efficiency of the cooling-heating circuit, in this embodiment a heat pump circuit 100 is coupled via the heat exchanger 70 with the cooling-heating circuit. The heat pump circuit is operated with CO₂ or R134a and in the represented embodiment is of the reversible type, i.e. can be used both to heat and also to cool the passenger compartment.

The heat pump circuit 100 comprises, apart from the heat exchanger 70, two compressors which each enable an operation of the heat pump circuit 100 in one direction. Alternatively to the two compressors, a single compressor 102 could also be provided, which can be appropriately operated in both directions. Alternatively a single monodirectional compressor would also be possible, if the heat pump circuit is to be used exclusively to heat the passenger compartment or exclusively to cool the passenger compartment. Furthermore, the heat pump circuit 100 comprises, in a manner that in itself is classical, a four-way valve 106, a condenser 107; 108 and an evaporator 107; 108. By providing a heat pump circuit the utilizable temperature level can be drastically increased, e.g. to heat the passenger area. The association of a heat pump circuit is particularly advantageous in view of the efforts to develop low-temperature fuel cells.

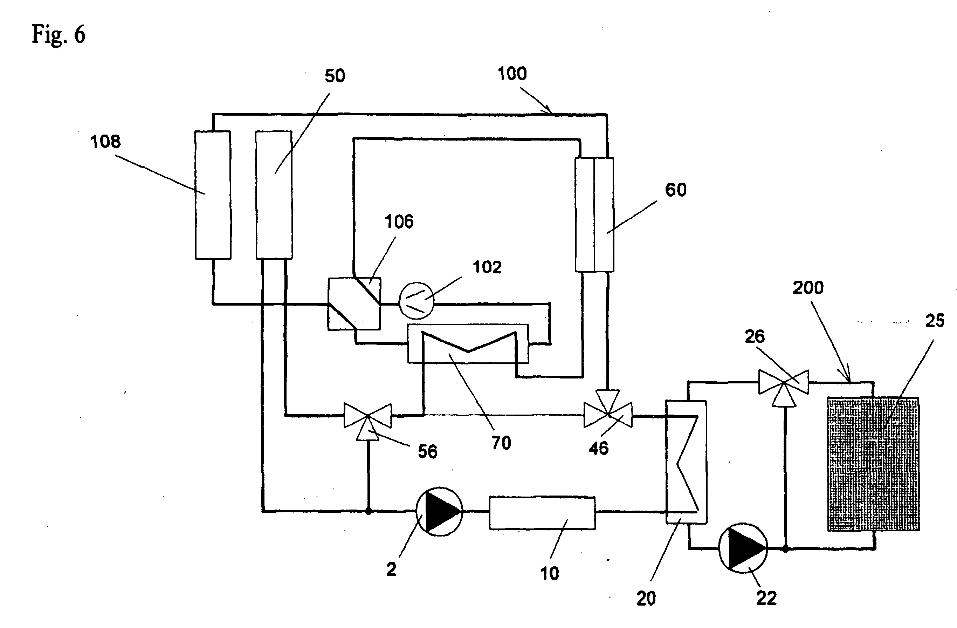

A sixth preferred embodiment of the cooling-heating circuit according to the invention is represented in Figure 6. In this embodiment a heat pump circuit operated with CO₂ or R134a is also assigned. In addition to the coupling represented in Figure 5 by means of the heat exchanger 70, in the represented embodiment the evaporator of the heat pump circuit 100 is constructed as heat exchanger 60, which lowers the temperature of the cooling-heating circuit. Otherwise the heat pump circuit 100 substantially corresponds with that represented in Figure 5, so that a detailed description of the remaining components does not need to be repeated here.

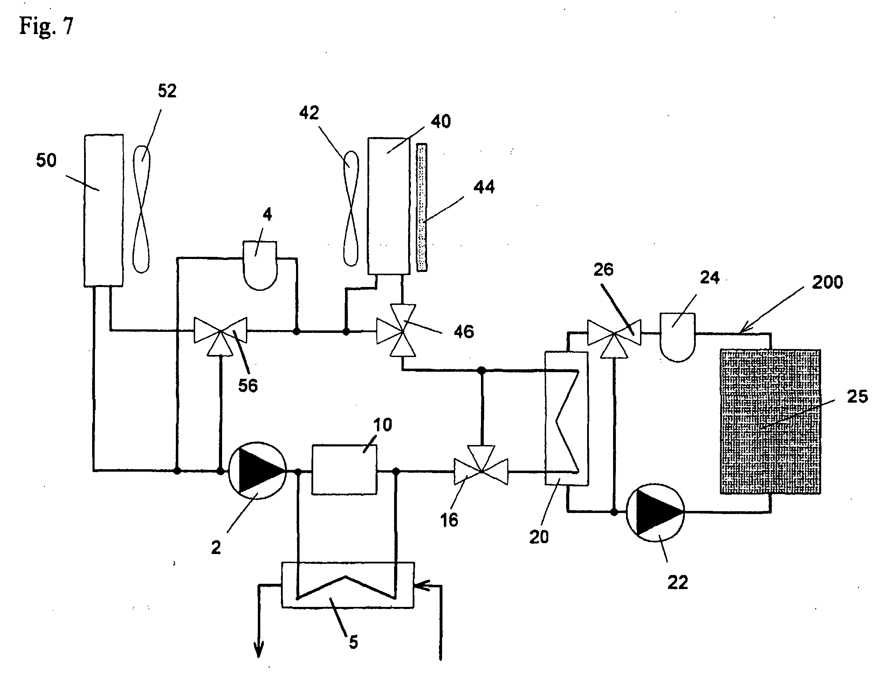

Finally, a seventh embodiment of the cooling-heating circuit according to the invention is represented in Figure 7. In this embodiment, which essentially corresponds to the embodiment shown in Figure 1, a condenser 5 for a cooling circuit, which is preferably operated with the coolants R134a or CO₂, is additionally provided in front of the cooling pump 2. The condenser 5 represents a further temperature-increasing device with respect to the cooling-heating circuit and with respect to its association and switching can be provided at a suitable position as described in detail with reference to the preceding embodiments for the temperature-increasing and temperature-reducing devices provided there. In particular, the condenser 5 for the maximum temperature transfer should be disposed at the coldest point of the cooling-heating circuit, i.e. for example and as represented directly behind the cooler 50 that can be supplied with ambient air. With respect to the other components of the represented cooling-heating circuit, reference is made to the description of the preceding embodiments.

Summing up, it can be stated that with the heating circuit according to the invention increased efficiency is achieved by the operating conditions of the individual temperature-increasing and/or temperature-reducing devices being taken into consideration during the association, in particular the arrangement or positioning in the cooling-heating circuit. By the association of a heat pump circuit, the efficiency can be increased even further with the additional advantage of an increased level of utilizable heat.

Although the invention was described in detail above with reference to currently preferred embodiments, the person skilled in the art should recognize that various modifications are possible without departing from the concept according to the invention, as specified in the claims. In particular, the very different series and/or parallel circuits with very varied sequences, in each case depending on the operating parameters, in particular the temperature, should be regarded as equivalent solutions. Expressed differently, individual temperature-increasing and/or temperature-reducing devices could also be combined in groups in order to be associated as a group in series and/or parallel to the cooling-heating circuit. Furthermore, it should be mentioned that all specific features of an individual preferred embodiment can be transferred in each case to other embodiments. For example, also in the case of the embodiments shown in Figures 5 and 6 an additional electrical heating device could additionally be provided, e.g. in the form of a PTC heating register.

## Claims

1. A cooling-heating circuit for a powered vehicle, having at least two devices (10,20) that increase the temperature of the cooling-heating circuit, at least two devices (40,50) that reduce the temperature of the cooling-heating circuit and at least one pump (2), the temperature-increasing devices (10,20) and/or the temperature-reducing devices (40,50) being associated with the cooling-heating circuit at least partly in accordance with their operating states, in accordance with their temperatures,
**characterized in that** the temperature-increasing devices (10,20) and/or the temperature-reducing devices (40,50) can be switched between series and/or parallel arrangement at least to some extent with respect to their association with the cooling-heating circuit.

2. The cooling-heating circuit of Claim 1, **characterized in that** the temperature-increasing devices (10,20) and/or the temperature-reducing devices (40,50) can be associated with the cooling-heating circuit at least to some extent selectively.

3. The cooling-heating circuit of Claim 1 , **characterized in that** the temperature-increasing devices (10,20) and/or the temperature-reducing devices (40,50) can be switched at least to some extent with respect to their association with the cooling-heating circuit, in particular with respect to the sequence.

4. The cooling-heating circuit of claim 1, **characterized in that** at least one temperature-increasing device (20) is a fuel cell (25) or a heat exchanger of a fuel cell cooling circuit.

5. The cooling-heating circuit of claim 1, **characterized in that** at least one temperature-increasing device (10) is an electric power output stage or a heat exchanger of an electric power output stage cooling circuit.

6. The cooling-heating circuit of claim 1, **characterized in that** at least one temperature-increasing device is a process gas cooling device (30), in particular a heat exchanger for a fuel gas (21) and/or compressed air (23).

7. The cooling-heating circuit of claim 1, **characterized in that** a condenser (5) for a refrigerant circuit with the coolant R134a or CO₂ can be associated with the cooling circuit.

8. The cooling-heating circuit of claim 1 **characterized in that** a heat pump circuit (100), in particular a reversible heat pump circuit, is associated with the cooling-heating circuit.

9. The cooling-heating circuit of claim 8, **characterized in that** the heat pump circuit is associated with the cooling-heating circuit via at least one heat exchanger, in particular via two heat exchangers.

10. The cooling-heating circuit of claim 8, **characterized in that** the heat exchanger or heat exchangers is associated with the cooling-heating circuit as temperature-increasing and/or temperature-reducing device(s).

## Patentansprüche

1. Kühl-Heiz-Kreis für ein Kraftfahrzeug, mit zumindest zwei die Temperatur des Kühl-Heiz-Kreises erhöhenden Einrichtungen (10, 20), zumindest zwei die Temperatur des Kühl-Heiz-Kreises senkenden Einrichtungen (40, 50) und zumindest einer Pumpe (2), wobei die temperaturerhöhenden Einrichtungen (10, 20) und/oder die temperatursenkenden Einrichtungen (40, 50) zumindest teilweise ihren Betriebszuständen entsprechend, ihren Temperaturen entsprechend, dem Kühl-Heiz-Kreis zugeordnet sind, **dadurch gekennzeichnet, daß** die temperaturerhöhenden Einrichtungen (10, 20), und/oder die temperatursenkenden Einrichtungen (40, 50) zumindest teilweise bezüglich ihrer Zuordnung zu dem Kühl-Heiz-Kreis zwischen Reihen- und/oder Parallelanordnung schaltbar sind.

2. Kühl-Heiz-Kreis nach Anspruch 1, **dadurch gekennzeichnet, daß** die temperaturerhöhenden Einrichtungen (10, 20) und/oder die temperatursenkenden Einrichtungen (40, 50) zumindest teilweise selektiv dem Kühl-Heiz-Kreis zuordenbar sind.

3. Kühl-Heiz-Kreis nach Anspruch 1, **dadurch gekennzeichnet, daß** die temperaturerhöhenden Einrichtungen (10, 20), und/oder die temperatursenkenden Einrichtungen (40, 50) zumindest teilweise bezüglich ihrer Zuordnung zu dem Kühl-Heiz-Kreis, insbesondere bezüglich der Reihenfolge, schaltbar sind.

4. Kühl-Heiz-Kreis nach Anspruch 1, **dadurch gekennzeichnet, daß** zumindest eine temperaturerhöhende Einrichtung (20) eine Brennstoffzelle (25) oder ein Wärmetauscher eines Brennstoffzellen-Kühlkreises ist.

5. Kühl-Heiz-Kreis nach Anspruch 1, **dadurch gekennzeichnet, daß** zumindest eine temperaturerhöhende Einrichtung (10) eine elektrische Leistungsstelle oder ein Wärmetauscher eines elektrischen Leistungsstellen-Kühlkreislaufes ist.

6. Kühl-Heiz-Kreis nach Anspruch 1, **dadurch gekennzeichnet, daß** zumindest eine temperaturerhöhende Einrichtung eine Prozeßgas-Kühleinrichtung (30), insbesondere ein Wärmetauscher für ein Kraftstoffgas (21) und/oder komprimierte Luft (23) ist.

7. Kühl-Heiz-Kreis nach Anspruch 1, **dadurch gekennzeichnet, daß** dem Kühl-Heiz-Kreis ein Kondensator (5) für einen Kältekreis mit dem Kältemittel R134a oder CO₂ zuordenbar ist.

8. Kühl-Heiz-Kreis nach Anspruch 1, **dadurch gekennzeichnet, daß** dem Kühl-Heiz-Kreis ein Wärmepumpenkreislauf (100), insbesondere ein reversibler Wärmepumpenkreislauf, zugeordnet ist.

9. Kühl-Heiz-Kreis nach Anspruch 8, **dadurch gekennzeichnet, daß** der Wärmepumpenkreislauf über zumindest einen Wärmetauscher, insbesondere über zwei Wärmetauscher, dem Kühl-Heiz-Kreis zugeordnet ist.

10. Kühl-Heiz-Kreis nach Anspruch 8, **dadurch gekennzeichnet, daß** der oder die Wärmetauscher dem Kühl-Heiz-Kreis als temperaturerhöhende und/oder temperatursenkende Einrichtung(en) zugeordnet ist/sind.

## Revendications

1. Circuit de refroidissement-chauffage d'un véhicule à moteur, ayant au moins deux dispositifs (10, 20) qui augmentent la température du circuit de refroidissement-chauffage, au moins deux dispositifs (40, 50) qui réduisent la température du circuit de refroidissement-chauffage et au moins une pompe (2), les dispositifs augmentant la température (10, 20) et/ou les dispositifs réduisant la température (40, 50) étant associés avec le circuit de refroidissement-chauffage du moins en partie en fonction de leurs états de fonctionnement et en fonction de leurs températures,
**caractérisé en ce que**, les dispositifs augmentant la température et/ou les dispositifs réduisant la température peuvent être commutés entre un agencement en série et/ou en parallèle du moins dans une certaine mesure en ce qui concerne leur association avec le circuit de refroidissement-chauffage.

2. Circuit de refroidissement-chauffage selon la revendication 1, **caractérisé en ce que** les dispositifs augmentant la température (10, 20) et/ou les dispositifs réduisant la température (40, 50) peuvent être associés au circuit de refroidissement-chauffage du moins dans une certaine mesure, sélectivement.

3. Circuit de refroidissement-chauffage selon la revendication 1, **caractérisé en ce que** les dispositifs augmentant la température (10, 20) et/ou les dispositifs réduisant la température (40, 50) peuvent être commutés du moins dans une certaine mesure en ce qui concerne leur association avec le circuit de refroidissement-chauffage, en particulier en ce qui concerne la séquence.

4. Circuit de refroidissement-chauffage selon la revendication 1, **caractérisé en ce qu'**au moins un dispositif augmentant la température (20) est une pile à combustible (25) ou un échangeur thermique du circuit de refroidissement d'une pile à combustible.

5. Circuit de refroidissement-chauffage selon la revendication 1, **caractérisé en ce qu'**au moins un dispositif augmentant la température (10) est un étage de production d'énergie électrique ou un échangeur thermique du circuit de refroidissement d'un étage de production d'énergie électrique.

6. Circuit de refroidissement-chauffage selon la revendication 1, **caractérisé en ce qu'**au moins un dispositif augmentant la température est un dispositif de refroidissement de gaz de traitement (30), en particulier un échangeur thermique pour un gaz combustible (21) et/ou pour de l'air comprimé (23).

7. Circuit de refroidissement-chauffage selon la revendication 1, **caractérisé en ce qu'**un condenseur (5) pour un circuit de réfrigérant fonctionnant avec le réfrigérant R134a ou le réfrigérant CO₂ peut être associé au circuit de refroidissement concerné.

8. Circuit de refroidissement-chauffage selon la revendication 1, **caractérisé en ce qu'**un circuit de pompe à chaleur (100), en particulier un circuit de pompe à chaleur réversible, est associé au circuit de refroidissement-chauffage.

9. Circuit de refroidissement-chauffage selon la revendication 8, **caractérisé en ce que** le circuit de pompe à chaleur est associé au circuit de refroidissement-chauffage par l'intermédiaire d'au moins un échangeur thermique, en particulier par l'intermédiaire de deux échangeurs thermiques.

10. Circuit de refroidissement-chauffage selon la revendication 8, **caractérisé en ce que** l'échangeur thermique ou les échangeurs thermiques sont associés au circuit de refroidissement-chauffage en tant que dispositif(s) augmentant la température et/ou réduisant la température.
